Europäisches Patentamt

European Patent Office

Office européen des brevets

(19)

(11) EP 1 246 189 A2

(12) EUROPÄISCHE PATENTANMELDUNG

(43) Veröffentlichungstag:
02.10.2002 Patentblatt 2002/40

(51) Int Cl.$^7$: **G11B 27/00**, G01D 5/347

(21) Anmeldenummer: 02006853.2

(22) Anmeldetag: 26.03.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **31.03.2001 DE 10116181**

(71) Anmelder: **ROBERT BOSCH GMBH**
**70442 Stuttgart (DE)**

(72) Erfinder:
• **Montag, Christoph**
**31134 Hildesheim (DE)**
• **Steeger, Karl**
**31249 Ohlum (DE)**

(54) **Verfahren und Vorrichtung zur Ermittlung der Absolutposition eines Bandlaufwerks**

(57) Die vorliegende Erfindung schafft ein Verfahren und eine Vorrichtung zur Ermittlung der Absolutposition eines Bandlaufwerks. Es erfolgen das Erfassen einer Winkelgeschwindigkeit des ziehenden Bandtellers (1') und einer Winkelgeschwindigkeit des gezogenen Bandtellers (1) bei einer konstanten Bandgeschwindigkeit ($V_0$); das Ermitteln der zeitlichen Ableitung der erfaßten Winkelgeschwindigkeit des ziehenden Bandtellers (1') und der zeitlichen Ableitung der erfaßten Winkelgeschwindigkeit des gezogenen Bandtellers (1); und das Ermitteln der Absolutposition unter Berücksichtigung der erfaßten Winkelgeschwindigkeiten, der ermittelten zeitlichen Ableitungen der erfaßten Winkelgeschwindigkeiten und eines jeweiligen Radius ($r_0$) des ziehenden Bandtellers (1') und des gezogenen Bandtellers (1).

Fig. 1

EP 1 246 189 A2

**Beschreibung**

STAND DER TECHNIK

Die vorliegende Erfindung betrifft ein Verfahren und eine Vorrichtung zur Ermittlung der Absolutposition eines Bandlaufwerks.

Obwohl auf beliebige Bandlaufwerke anwendbar, werden die vorliegende Erfindung sowie die ihr zugrundeliegende Problematik in bezug auf eine Compactcassetten-Bandlaufwerk erläutert.

Durch eine Echtzeitanzeige für Compactcassettenlaufwerke mit vergangener (Elapsed Time) und noch zu spielender Zeit (Remain Time) wie bei CD-Geräten kann der Benutzer nach Laden der Compactcassette über die absolute Position des Bandes informiert werden. Die Anzeige erfolgt zweckmäßigerweise in Minuten und Sekunden.

Bisher sind folgende Bandpositionsanzeigen erhältlich:

◆   Nichtlineare Zähler (z.B. Tellerumdrehungen), welche von Null beginnend inkremental zählen.

◆   Echtzeitanzeigen (in Minuten und Sekunden), welche aber nur von Null (bzw. vom Bandanfang startend) Aufschluß über die momentane Abspielposition geben.

◆   Echtzeitanzeigen, die nach Laden der Compactcassette die absolute Bandposition (auch z.B. in der Compactcassetten-Mitte) anzeigen. Hier muß jedoch entweder der Cassettentyp (Spieldauer) manuell vorgegeben werden, oder es erfolgt eine automatische Klassifizierung in genormte Bandlängen (z.B. C60, C90). Die Anzeige läuft jedoch falsch, wenn Bänder mit ungenormten Längen zum Einsatz kommen.

Die der vorliegenden Erfindung zugrundeliegende Problematik besteht also allgemein darin, ein verbessertes Verfahren und eine verbesserte Vorrichtung zur Ermittlung der Absolutposition eines Bandlaufwerks anzugeben, welche genau arbeiten und nicht auf einen bestimmten Bezugspunkt (z.B. Bandanfang) ausgerichtet sind.

VORTEILE DER ERFINDUNG

Das erfindungsgemäße Verfahren zur Ermittlung der Absolutposition eines Bandlaufwerks mit den Merkmalen des Anspruchs 1 bzw. die entsprechende Vorrichtung nach Anspruch 7 weisen gegenüber den bekannten Lösungsansätzen den Vorteil auf, daß sie eine automatische Bandlängenerkennung aufweist, so daß keine manuelle Vorgabe nötig ist. Dabei erfolgt keine Klassifizierung in Normtypen, d.h. es können alle erhältlichen Cassettentypen verwendet werden (z.B. auch vorbespielte Kaufcassetten C30, C42, etc.). Hierfür ist prinzipiell keine zusätzliche Hardware nötig. Das System ist auch für den speziell Autoreversebetrieb geeignet.

Führen Versorgungsspannungseinbrüche im Bordnetz oder Power-off zum Absturz (und Neustart), so können die aktuellen Zeiten und die Banddicke vorher in einem Onchip-E$^2$PROM gerettet werden, so daß dann keine erneute Einmessphase durchlaufen werden muß.

Die der vorliegenden Erfindung zugrundeliegende Idee besteht darin, die Echtzeitanzeigen "Elapsed Time" und "Remain Time" allein aus konstanten Vorgabegrößen und den Winkelgeschwindigkeiten der beiden Teller, deren Messung am Laufwerk standardmäßig vorgesehen ist, abzuleiten.

In den Unteransprüchen finden sich vorteilhafte Weiterbildungen und Verbesserungen des jeweiligen Gegenstandes der Erfindung.

Gemäß einer bevorzugten Weiterbildung wird zunächst eine jeweilige Banddicke des ziehenden Bandtellers und des gezogenen Bandtellers ermittelt, wobei diese ermittelten Banddicken gemittelt werden und aus der gemittelten Banddicke die Absolutposition ermittelt wird.

Gemäß einer weiteren bevorzugten Weiterbildung wird die Mittelung gewichtet durchgeführt.

Gemäß einer weiteren bevorzugten Weiterbildung wird die Absolutposition in Form einer vergangenen Zeit für den ziehenden Bandteller und einer verbleibenden Zeit für den gezogenen Bandteller ermittelt.

Gemäß einer weiteren bevorzugten Weiterbildung werden die vergangene Zeit für den ziehenden Bandteller und/oder die verbleibende Zeit für den gezogenen Bandteller auf einer Anzeigeeinrichtung angezeigt, wobei und die Größe der Inkremente bzw. Dekremente davon abhängig gemacht wird, ob der Anzeigewert kleiner, gleich oder größer als der ermittelte Zeitwert ist.

Gemäß einer weiteren bevorzugten Weiterbildung wird die jeweilige Winkelgeschwindigkeit durch ein optisches oder induktives Abtastverfahren erfaßt.

ZEICHNUNGEN

Ausführungsbeispiele der Erfindung sind in den Zeichnungen dargestellt und in der nachfolgenden Beschreibung näher erläutert.

Es zeigen:

Fig. 1 eine schematische Darstellung eines Bandtellers und einer Winkelgeschwindigkeits-Erfassungsvorrichtung einer Ausführungsform der erfindungsgemäßen Vorrichtung;

Fig. 2 ein Fließdiagramm zur Beschreibung einer Ausführungsform des erfindungsgemäßen Verfahrens zur Ermittlung der Absolutposition eines Bandlaufwerks; und

Fig. 3 ein Fließdiagramm zur Beschreibung einer Anzeigesteuerung bei der Ausführungsform des erfindungsgemäßen Verfahrens gemäß Fig. 2.

BESCHREIBUNG DER AUSFÜHRUNGSBEISPIELE

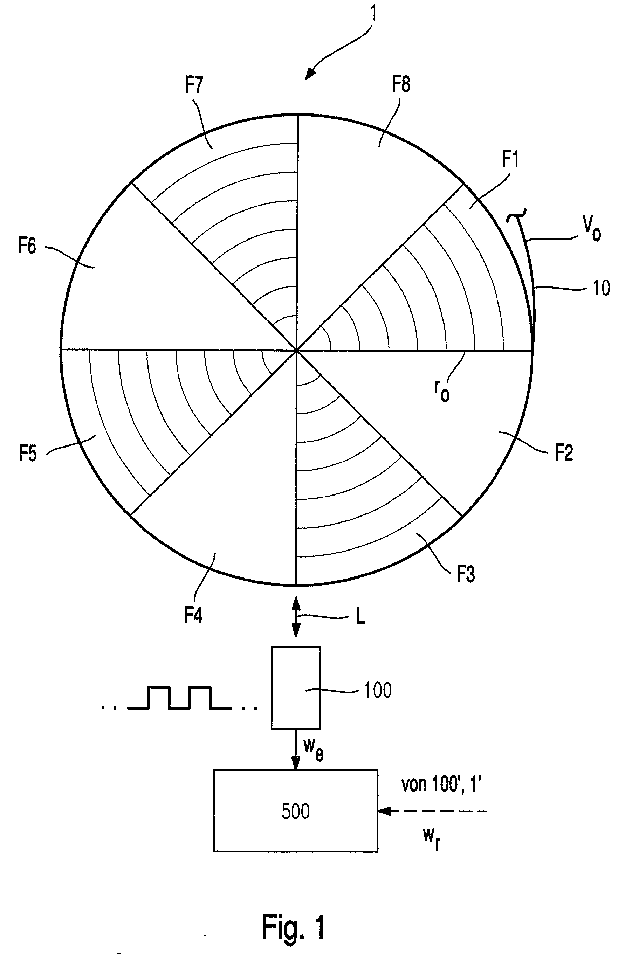

Fig. 1 zeigt eine schematische Darstellung eines Bandtellers und einer Winkelgeschwindigkeits-Erfassungsvorrichtung einer Ausführungsform der erfindungsgemäßen Vorrichtung.

In Figur 1 bezeichnet Bezugszeichen 1 einen linken gezogenen Bandteller und 10 ein auf den Bandteller gewickeltes Band. Auf dem Bandteller gibt es dunkle Felder F1, F3, F5, F7 sowie helle Felder F2, F4, F6, F8, welche in Zusammenhang einer optischen Abtastvorrichtung 100 zum Erfassen der Winkelgeschwindigkeit des Tellers 1 vorgesehen ist. Diese Erfassung erfolgt durch Abtastung mittels einem Lichtstrahl L und führt zu den in Figur 1 angedeuteten Rechteckimpulsen, deren Frequenz proportional zur Winkelgeschwindigkeit $\omega_1$ des Bandtellers 1 ist. Die von der Einrichtung 100 erfaßte Winkelgeschwindigkeit $\omega_1$ des Bandtellers 1 wird an einen Microcontroller 500 weitergeleitet, welcher die weiteren Funktionen der Vorrichtung zur Ermittlung der Absolutposition des betreffenden Bandlaufwerks zweckmäßigerweise in softwaremäßiger Ausgestaltung übernimmt.

Analoge Signale einer erfaßten Winkelgeschwindigkeit $\omega_r$ werden dem Microcontroller 500 vom rechten Bandteller 1' und einer entsprechenden optischen Abtastvorrichtung 100' geliefert.

Im Play-Modus wird das Band 10 mit der konstanten Geschwindigkeit $v_0$ = 4,76 cm/s am Tonkopf vorbeigezogen. Die einzigen zur Bestimmung der Absolutposition erforderlichen Meßsignale, nämlich die Winkelgeschwindigkeiten $\omega_1$, $\omega_r$ der beiden Teller 1, 1', werden, wie gesagt, von den beiden Abtastvorrichtungen 100, 100' an den Microcontroller 500 geliefert. Zur Berechnung benötigte Konstanten $r_0$, $v_0$, etc. sind zweckmäßigerweise in einem Festwertspeicher bzw. einem Schreib-/Lesespeicher des Microcontrollers 500 gespeichert.

Im Betrieb ermittelt der Microcontroller 500 die zeitliche Ableitung der erfaßten Winkelgeschwindigkeit $\omega_r$ des ziehenden Bandtellers 1' und die zeitliche Ableitung der erfaßten Winkelgeschwindigkeit $\omega_l$ des gezogenen Bandtellers 1. Daraus ermittelt der Microcontroller 500 die Absolutposition des Bandes in Form der verbleibenden Spielzeit $t_l$ auf dem gezogenen Teller und der verstrichenen Spielzeit $t_r$ auf dem ziehenden Teller unter Berücksichtigung der gespeicherten Konstanten $r_0$ und $v_0$. Das dazu benötigte Berechnungsverfahren wird nachstehend näher erläutert.

Nach dem Laden der Compactcassette erfolgt eine Einmessphase, in der zunächst die Banddicke d des Tonträgermaterials 10 anhand der Ableitung der beiden gemessenen Teller-Winkelgeschwindigkeiten im Play-Modus ermittelt wird. Daraus wird die Anzahl der Bandlagen des jeweiligen Tellers 1, 1' errechnet und über die Banddicke d eine Längenangabe L gewonnen, die der gesuchten Spielzeit proportional ist. Dabei stellt der ziehende Teller die vergangene Zeit $t_r$ (Elapsed Time) und der gezogene Teller die noch zu spielende Zeit $t_l$ (Remain Time) dar. Die Dauer der Einmessphase hängt vom Cassettentyp und der aktuellen Bandposition ab.

Zur näheren Erläuterung sind nachstehend zunächst die differentiellen Formeln der Echtzeitanzeige aufgeführt.

$$v_0 = \omega \cdot r \Rightarrow r = \frac{v_0}{\omega} \tag{I}$$

Dabei sind $v_0$ = 4,76 cm/s die konstante Bandgeschwindigkeit im Playmodus am Tonkopf, r der Radius und $\omega$ die gemessene Teller-Winkelgeschwindigkeit.

Weiterhin gilt für die zeitliche Ableitung des Radius

$$\dot{r} = v_0 \left( \frac{-\dot{\omega}}{\omega^2} \right) \qquad (\text{Ia})$$

wobei $r_0$ = 1,09 cm der vorgegebene Tellerradius (ohne Band) und $\omega$ die Winkelgeschwindigkeit des Tellers sind.

Andererseits lassen sich der Radius r bzw. seine zeitliche Ableitung ausdrücken durch

$$r = r_0 \pm \varphi \cdot \frac{d}{2\pi} \Rightarrow \dot{r} = \pm \frac{d}{2\pi} \omega \qquad (\text{Ib})$$

wobei d die Banddicke und $\varphi$ der überstrichene Winkel des Tellers sind. Dabei gilt

$$\omega = \dot{\varphi} \qquad (\text{Ic})$$

Somit erhält man für die gesuchte Banddicke d in Abhängigkeit von der Meßgröße $\omega$, der daraus ermittelten zeitlichen Ableitung der Meßgröße $\omega$ (der Winkelbeschleunigung) und der bekannten konstanten Größe $v_0$

$$d = \pm 2\pi \cdot v_0 \cdot \frac{\dot{\omega}}{\omega^3} \qquad (\text{Id})$$

Die Anzahl der Bandlagen N und und Bandlänge L auf einem Teller sind verknüpft durch die Beziehung

$$L = 2\pi \cdot r_O \cdot N + 2\pi \cdot \frac{N(N+1)d}{2} = 2\pi \cdot N \cdot \left( r_O + \frac{(N+1)d}{2} \right) \qquad (\text{II})$$

Andererseits gilt für die Anzahl der Bandlagen N im Play-Mode

$$N = \frac{(v_0 / \omega) - r_0}{d} \text{ aus } (r_0 + N \cdot d) = \frac{v_0}{\omega} \qquad (\text{III})$$

und somit kann N in Gleichung (II) durch bekannte Größen substituiert werden. Die anzuzeigende Zeit t ergibt sich schließlich aus

$$t = \frac{L}{v_0} \qquad (\text{IV})$$

Sie bedeutet für den Aufwickelteller die vergangene Zeit und für den Abwickelteller die noch zu spielende Zeit.

Für die Implementierung der obigen Gleichungen im Microcontroller 500 der Vorrichtung erfolgt ein Übergang in den diskreten Bereich. Hier gilt:

$$\omega' = \frac{2\pi}{T_{mess}} \qquad (\text{V})$$

wobei $T_{mess}$ die Zeit für 1 Tellerumdrehung, z.B. 8 Impulse in 0,8 s, und $\omega'$ die Winkelgeschwindigkeit des Tellers sind.

Somit ergibt sich aus Gleichung (Id)

$$d_{l,r} = \frac{2\pi \cdot v_o}{n \cdot T_{\text{int}}} \cdot \frac{\pm\left[\omega'(i) - \omega'(i-n)\right]}{\left[\dfrac{\omega'(i) + \omega'(i-n)}{2}\right]^3} \qquad (VI)$$

wobei i einen Index der Messungen, n einen Versatz der Messungen, hier z.B. n = 2, $T_{\text{int}}$ ein Abtastintervall, hier z.B. $T_{\text{int}}$ = 10s, $d_{l,r}$ die Banddicke, linker (gezogener) und rechter (ziehender) Teller bezeichnen.

Zur Steigerung der Genauigkeit werden $d_l$ und $d_r$ bei der vorliegenden Ausführungsform zu $d_{aktuell}$ arithmetisch gemittelt:

$$d_{aktuell} = \frac{d_l + d_r}{2} \qquad (VII)$$

Zur weiteren Genauigkeitssteigerung wird das fortlaufende arithmetische Mittel aus dem bereits berechneten $d_{alt}$ und aktuell errechneten $d_{aktuell}$ zu $d_{neu}$ verrechnet:

$$d_{neu} = a \cdot d_{alt} + b \cdot d_{aktuell} \qquad (VIII)$$

wobei a + b = 1 und
a = 0, 1/2, 1/3, 1/4,...,1/16, 1/16, 1/16, ...
Mit anderen Worten sinkt der Wichtungsfaktor von $d_{alt}$ zunächst von ½ auf 1/16 und wird dann konstant gehalten.
Analog obiger Gleichung (III) ergibt sich für die normierten Bandlagen des linken Tellers N'$_l$ und die normierten Bandlagen des rechten Tellers N'$_r$:

$$N'_{l,r} = \frac{\dfrac{2\pi}{\omega'} - 2\pi \dfrac{r_0}{v_0}}{d_{neu}} \qquad (IX)$$

wobei für die genormte Bandlagenzahl $N' = N_{tatsächlich} \cdot \dfrac{2\pi}{v_0}$ gilt und $N_{tatsächlich}$ die eigentliche Bandlagenzahl ist.
Schließlich ergibt sich für die noch zu spielende Zeit $t_l$ und die vergangene Zeit $t_r$:

$$t_{l,r} = r_0 \cdot N'_{l,r} + \frac{d_{neu} \cdot N'_{l,r}\left(N'_{l,r}\dfrac{v_0}{2\pi}+1\right)}{2} \qquad (X)$$

Die aufgeführten Gleichungen gelten für den Playmodus. Nach Laden der Compactcassette verstreichen typischerweise 20 s (Einmessphase), bis die ersten Zeitwerte zur Verfügung stehen. Danach kann auch im Spulmodus die Zeit nachgeführt werden, wenn man ab Spulstart die Zahl der Tellerumdrehungen N'$_{l,r}$ vorzeichenrichtig zu den im Playmodus errechneten Bandlagen N'$_{l,r}$ addiert und nach einer Tellerumdrehung Gleichung (X) jeweils erneut berechnet.

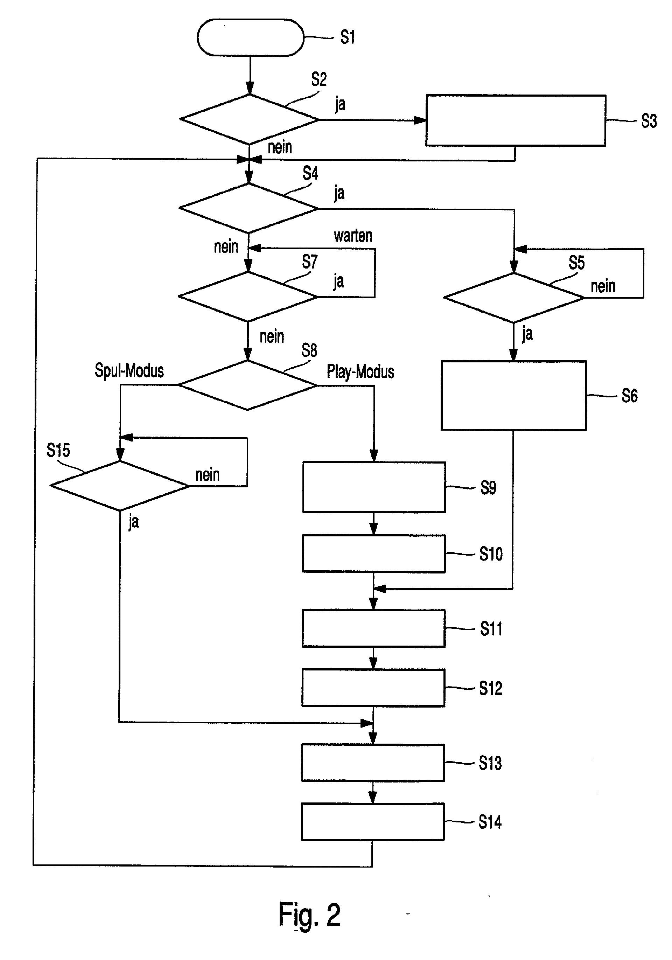

Fig. 2 zeigt ein Fließdiagramm zur Beschreibung einer Ausführungsform des erfindungsgemäßen Verfahrens zur Ermittlung der Absolutposition eines Bandlaufwerks.
Der Ablauf ist schematisch und nur für die erste Echtzeit dargestellt. Der Algorithmus zur Berechnung der zweiten Echtzeit ist gleich aufgebaut. Der rechte Zweig in Fig. 2 wird in der Einmessphase abgearbeitet und füllt einen Ringspeicher mit den Winkelgeschwindigkeiten der Teller zunächst ohne Berechnung. Im eingemessenen Playmodus (Mittelzweig) werden dann die vier Gleichungen berechnet, die zu den Echtzeiten "Elapsed" und "Remain" führen. Ist Spulen aktiv, so werden nur auf- oder abgespulte Bandlagen der Teller gezählt und über Gleichung (X) direkt neue Zeiten berechnet.

Im einzelnen wird bei Schritt S1 die Routine zur Berechnung der Echtzeiten gestartet. In Schritt S2 wird geprüft, ob die Kassette noch im Einsteckschlitz ist. Ist dies der Fall, springt das Programm zu Schritt S3, in dem bereits gespeicherte Zeiten $t_{l,r}$ und ein berechneter gemittelter Banddickenwert d aus einem EEPROM des Microcontrollers 500 geholt und in ein nicht gezeigtes Anzeigeregister vorgeladen werden.

Wird die Prüfung in Schritt S2 mit NEIN beurteilt, so wird in Schritt S4 geprüft, ob es sich um einen Neustart handelt, also noch keine Zeitwerte vorliegen. Ist das der Fall, so springt das Programm zu Schritt S5, in dem so lange gewartet wird, bis der Play-Modus aktiv ist. Ist der Play-Modus schließlich aktiv, so fährt das Programm fort mit Schritt S6, in dem die Winkelgeschwindigkeit der beiden Bandteller 1, 1' dreimal gemessen wird und über Gleichung (V) ein Ringspeicher des Microcontrollers 100 mit den gemessenen Winkelgeschwindigkeiten gefüllt wird.

Danach springt das Programm zu Schritt S11, in dem die Dickenwerte $d_{l,r}$ gemäß Gleichung (VI) berechnet werden und gemäß obiger Formel (VIII) gemittelt werden. Im darauffolgenden Schritt S12 werden die normierten Bandlagen des linken Tellers $N'_l$ und des rechten Tellers $N'_r$ gemäß Gleichung (IX) berechnet. Im darauffolgenden Schritt S13 werden die verbleibende Zeit für den linken Teller $t_l$ und die verstrichene Zeit für den rechten Teller $t_r$ gemäß Gleichung (X) berechnet. Schließlich werden in Schritt S14 die berechneten Zeiten $t_{l,r}$ im besagten EEPROM des Microcontrollers 500 abgelegt, bevor das Programm zum Schritt S4 zurückspringt.

Falls im Schritt S4 die Antwort NEIN ist, es sich also um keinen Neustart handelt und bereits Zeitwerte im EEPROM-Speicher vorliegen, springt das Programm zum Schritt S7, in dem geprüft wird, ob die Wiedergabe bzw. der Bandtransport aus irgendeinem Grund, wie z.B. einer Pauseneinstellung, unterbrochen sind. Trifft dies zu, so wird in Schritt S7 so lange gewartet, bis entweder der Play-Modus oder der Spul-Modus aktiv sind. Dann geht das Programm weiter zu Schritt S8, in dem entschieden wird, ob der Play-Modus oder der Spul-Modus aktiv ist. Ist der Play-Modus aktiv, so verzweigt das Programm von Schritt S8 zu Schritt S9, in dem jeweils nach 10 s die Umdrehungszeiten der Teller 1, 1' gemessen werden, wonach in Schritt S10 gemäß Gleichung (V) die entsprechenden Winkelgeschwindigkeiten berechnet werden.

Nach Schritt S10 fährt das Programm fort mit Schritt S11 bis S14, wie bereits beschrieben.

Ist im Schritt S8 die Antwort, daß es sich um den Spul-Modus handelt, so springt das Programm weiter zu Schritt S15, in dem so lange gewartet wird, bis eine Tellerumdrehung vorbei ist, bis zum Schritt S13 verzweigt wird.

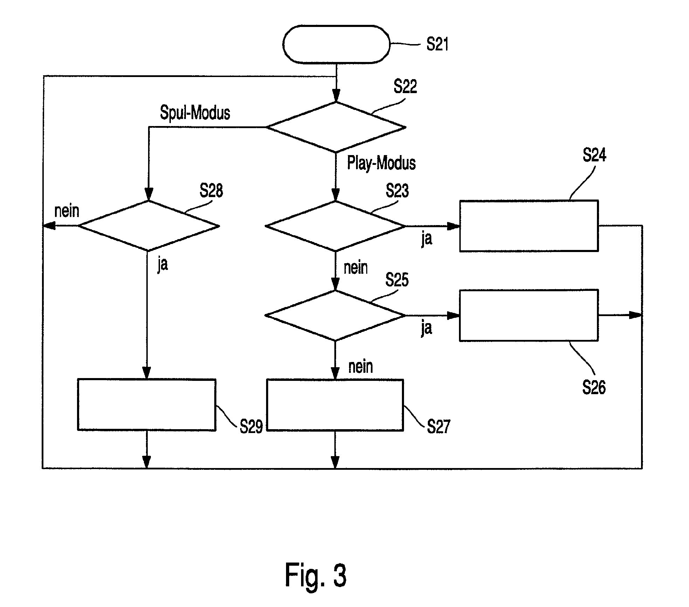

Fig. 3 zeigt ein Fließdiagramm zur Beschreibung einer Anzeigesteuerung bei der Ausführungsform des erfindungsgemäßen Verfahrens gemäß Fig. 2.

Da im Playmodus nur alle 10 s neue Zeitwerte zur Verfügung stehen und diese eine Streuung aufweisen, muß die tatsächlich angezeigte Zeit im Display an die berechnete Zeit kontinuierlich herangeführt werden, um keine Zeitsprünge zu erhalten. Dies geschieht z.B. mit drei verschiedenen Zeitkonstanten: 0,6 s; 1 s; 1,4 s, wie Fig. 3 entnehmbar. Ist Spulen aktiv, so wird die Anzeige mit den neu berechneten Zeiten aus Gleichung (X) direkt upgedatet.

Gemäß Figur 3 beginnt die Routine zur Displaysteuerung bzw. Anzeigesteuerung mit Schritt S21. Im Schritt S22 wird geprüft, ob es sich bei dem vorliegenden Betriebsmodus um den Play-Modus oder den Spul-Modus handelt. Handelt es sich um den Play-Modus, so springt das Programm zum Schritt S23, in dem geprüft wird, ob der augenblickliche Anzeigewert größer als die berechnete Zeit ist. Trifft dies zu, so springt das Programm zum Schritt S24, in dem der momentane Anzeigewert mit 0,6 Sekunden inkrementiert wird. Danach springt das Programm zurück zum Schritt S22.

Ist die Antwort im Schritt S23 NEIN, so springt das Programm zum Schritt S25, in dem geprüft wird, ob der momentane Anzeigewert kleiner als die berechnete Zeit ist. Ist dies der Fall, so springt das Programm zum Schritt S26, in dem der momentane Anzeigewert mit 1,4 s inkrementiert wird, bevor der Rücksprung zum Schritt S22 erfolgt. Ist die Antwort in Schritt S25 negativ, so springt das Programm zum Schritt S27, in dem der Anzeigewert mit 1 s inkrementiert wird. Aus diesem Verfahren ergibt sich, daß zur Vermeidung von abrupten Sprüngen die Größe der Inkremente bzw. Dekremente für den linken Bandteller 1 davon abhängig gemacht wird, ob der momentane Anzeigewert kleiner, gleich oder größer als der ermittelte Zeitwert ist.

Ist in Schritt S22 die Antwort, daß es sich um den Spul-Modus handelt, so wird in Schritt S28 geprüft, ob eine neue Bandlagenanzahl vorliegt. Ist dies der Fall, so wird die Anzeige in Schritt S29 direkt mit neuen Zeiten geladen, bevor das Programm zurück zum Schritt S22 springt. Ist dies nicht der Fall, so springt das Programm unmittelbar nach Schritt S28 zum Schritt S22 zurück.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere ist die Erfindung nicht auf die angegebenen Mittelungen und Erfassungsmethoden für die Winkelgeschwindigkeiten beschränkt. Auch können die Tellerradien verschieden sein und die Absolutpositionen in beliebigen Einheiten angegeben werden.

BEZUGSZEICHENLISTE

| 1,1' | linker (gezogener), rechter(ziehender) Bandteller |
| $r_0$ | Radius von 1,1' |
| 100,100' | optische Abtastvorrichtung |
| 500 | Mikrocontroller |
| $v_0$ | Bandgeschwindigkeit |
| 10 | Band |
| L | Lichtstrahl |
| F1-F8 | Abtastfelder |

**Patentansprüche**

1.  Verfahren zur Ermittlung der Absolutposition eines Bandlaufwerks mit einem ziehenden Bandteller (1') und einem gezogenen Bandteller (1), welches mit mindestens einer konstanten Bandgeschwindigkeit ($v_0$) betreibbar ist, mit den Schritten:

    Erfassen einer Winkelgeschwindigkeit des ziehenden Bandtellers (1') und einer Winkelgeschwindigkeit des gezogenen Bandtellers (1) bei der konstanten Bandgeschwindigkeit ($v_0$) ;

    Ermitteln der zeitlichen Ableitung der erfaßten Winkelgeschwindigkeit des ziehenden Bandtellers (1') und der zeitlichen Ableitung der erfaßten Winkelgeschwindigkeit des gezogenen Bandtellers (1) ;

    Ermitteln der Absolutposition unter Berücksichtigung der erfaßten Winkelgeschwindigkeiten, der ermittelten zeitlichen Ableitungen der erfaßten Winkelgeschwindigkeiten und eines jeweiligen Radius ($r_0$) des ziehenden Bandtellers (1') und des gezogenen Bandtellers (1).

2.  Verfahren nach Anspruch 1, **dadurch gekennzeichnet, daß** zunächst eine jeweilige Banddicke ($d_l$, $d_r$) des ziehenden Bandtellers (1') und des gezogenen Bandtellers (1) ermittelt wird, diese ermittelten Banddicken ($d_l$, $d_r$) gemittelt werden und aus der gemittelten Banddicke die Absolutposition ermittelt wird.

3.  Verfahren nach Anspruch 2, **dadurch gekennzeichnet, daß** die Mittelung gewichtet durchgeführt wird.

4.  Verfahren nach Anspruch 1, 2 oder 3, **dadurch gekennzeichnet, daß** die Absolutposition in Form einer vergangenen Zeit für den ziehenden Bandteller (1') und einer verbleibenden Zeit für den gezogenen Bandteller (1) ermittelt wird.

5.  Verfahren nach Anspruch 4, **dadurch gekennzeichnet, daß** die vergangene Zeit für den ziehenden Bandteller (1') und/oder die verbleibende Zeit für den gezogenen Bandteller (1) auf einer Anzeigeeinrichtung angezeigt werden und die Größe der Inkremente bzw. Dekremente davon abhängig gemacht wird, ob der Anzeigewert kleiner, gleich oder größer als der ermittelte Zeitwert ist.

6.  Verfahren nach einem der vorhergehenen Ansprüche, **dadurch gekennzeichnet, daß** die jeweilige Winkelgeschwindigkeit durch ein optisches oder induktives Abtastverfahren erfaßt wird.

7.  Vorrichtung zur Ermittlung der Absolutposition eines Bandlaufwerks mit einem ziehenden Bandteller (1') und einem gezogenen Bandteller (1), welches mit mindestens einer konstanten Bandgeschwindigkeit ($v_0$) betreibbar ist, mit:

    einer Erfassungseinrichtung (100, 100') zum Erfassen einer Winkelgeschwindigkeit des ziehenden Bandtellers (1') und einer Winkelgeschwindigkeit des gezogenen Bandtellers (1) bei der konstanten Bandgeschwindigkeit ($v_0$) ;

einer Ermittlungseinrichtung (500) zum Ermitteln der zeitlichen Ableitung der erfaßten Winkelgeschwindigkeit des ziehenden Bandtellers (1') und der zeitlichen Ableitung der erfaßten Winkelgeschwindigkeit des gezogenen Bandtellers (1) ; und

einer Ermittlungseinrichtung (500) zum Ermitteln der Absolutposition unter Berücksichtigung der erfaßten Winkelgeschwindigkeiten, der ermittelten zeitlichen Ableitungen der erfaßten Winkelgeschwindigkeiten und eines jeweiligen Radius ($r_0$) des ziehenden Bandtellers (1') und des gezogenen Bandtellers (1).

8. Vorrichtung nach Anspruch 7, **dadurch gekennzeichnet, daß** die Ermittlungseinrichtung (500) zunächst eine jeweilige Banddicke ($d_l$, $d_r$) des ziehenden Bandtellers (1') und des gezogenen Bandtellers (1) ermittelt, diese ermittelten Banddicken ($d_l$, $d_r$) mittelt und aus der gemittelten Banddicke die Absolutposition ermittelt.

9. Vorrichtung nach Anspruch 8, **dadurch gekennzeichnet, daß** die Ermittlungseinrichtung (500) die Mittelung gewichtet durchführt.

10. Vorrichtung nach Anspruch 7, 8 oder 9, **dadurch gekennzeichnet, daß** die Ermittlungseinrichtung (500) die Absolutposition in Form einer vergangenen Zeit für den ziehenden Bandteller (1') und einer verbleibenden Zeit für den gezogenen Bandteller (1) ermittelt.

11. Vorrichtung nach Anspruch 4, **dadurch gekennzeichnet, daß** die vergangene Zeit für den ziehenden Bandteller (1') und/oder die verbleibende Zeit für den gezogenen Bandteller (1) auf einer Anzeigeeinrichtung angezeigt werden und die Größe der Inkremente bzw. Dekremente davon abhängig gemacht wird, ob der Anzeigewert kleiner, gleich oder größer als der ermittelte Zeitwert ist.

12. Vorrichtung nach einem der vorhergehenen Ansprüche 7 bis 11, **dadurch gekennzeichnet, daß** Erfassungseinrichtung (100, 100') die jeweilige Winkelgeschwindigkeit durch ein optisches oder induktives Abtastverfahren erfaßt.

Fig. 1

Fig. 2

Fig. 3